# EUROPEAN PATENT APPLICATION

(11) **EP 3 319 023 A1**
(43) Date of publication of application: **09.05.2018**
(21) Application number: 16818030.5
(22) Date of filing: 30.06.2016
(51) Int. Cl.: G06Q 10/06

(54) **CUSTOMER-INFORMATION PROVIDING SYSTEM, CONTROL METHOD THEREFOR, AND COMPUTER PROGRAM**

(30) Priority: 30.06.2015 JP 2015131746
(71) Applicant: Recruit Holdings Co., Ltd., Tokyo 104-0061 (JP)
(72) Inventor: IHARA, Shingo, Tokyo 100-6640 (JP); NAGAI, Yuki, Tokyo 100-6640 (JP)
(74) Representative: EIP
(86) International application number: PCT/JP2016/069451
(87) International publication number: WO 2017/002922

(57) **Abstract**

There is provided a customer-information providing system including: a history-information sending unit that sends information data related to an operation history of a customer apparatus to a server apparatus through a network; a parameter calculating unit that calculates a parameter indicative of the operational status of the customer apparatus and/or the busyness of a customer store based on data related to the operation history; a customer-information sending unit that sends information related to the customer store and/or the customer apparatus including the parameter to a user apparatus; a display-information calculating unit that generates image data corresponding to display information to be provided to a user based on information related to the customer store and/or the customer apparatus; and a display unit that displays the display information corresponding to the image data.

## Description

### Cross-Reference to Related Application

This application is based upon Japanese Patent Application No. 2015-131746, filed June 30, 2015, the entire contents of which are incorporated herein by reference.

### Technical Field

The present disclosure relates to a customer-information providing system, a control method therefor, and a computer program.

### Background Art

So-called route business (also called "route sales") is one of business forms to visit own company's business partners regularly or irregularly in order not only to retain existing customers but also to have an opportunity to negotiate a new business deal. Unlike new business development and individual case type business, it is said that the route business is the activity to follow, support, and the like (hereinafter simply called "follow") existing customers in order to increase the sales unit price per customer. In this route business, for example, it is desired to develop a proper follow-up plan (timing of visit, frequency of visit, allocation of a person in charge, and the like for each target business partner) based on the sales performance and stock status of commercial goods/commercial materials delivered mainly to existing customers, or the operation results and operational status of apparatuses/system products delivered or leased to the customers so as to follow the customers timely based on the follow-up plan. This can increase customer satisfaction, and hence make it advantageous to retain or increase the transactions with the existing customers, and get new transactions.

In the meantime, depending on the commercial goods or products delivered or leased to the customers, it may be difficult to figure out the sales performance, stock status, operation results, operational status, and the like of these commercial goods or products, making it difficult to develop a thorough follow-up plan. Further, as the number of customers, the number of customer stores (sales places), and the like increase, it may be difficult even to follow all visiting destinations evenly. Therefore, sales representatives often have to do such business activities as to go round to visit the visiting destinations regularly (e.g., a few times a month at regular intervals, or the like) and ceremonially according to an instruction manual, and the like (for example, see Patent Document 1).

### Citation List

### Patent Document

Patent Document 1: Japanese Patent Application Laid-Open No. 2003-99092

### Summary

However, depending on the product sales or the operational status of apparatuses and the like on the customer side, there can be customers who are rarely necessary to follow, and to the contrary, there can be customers who are necessary to follow very often and carefully. Nonetheless, business visits made to the customers without distinguishing between both, for example, regularly and ceremonially at the same frequency, could reduce the sales efficiency and the sales effect. It is also presumed that the degree of follow-up (the frequency of visit, the time per visit, and the like) is different from customer to customer due to the discretion of each sales representative. In such a case, customer satisfaction may be reduced because the customer feels not to get sufficient follow-up, and this may also result in a loss of opportunity to get new transactions. Further, there is fear that the spare time of each sales representative increases in some cases and this further reduces the sales efficiency.

Therefore, the present disclosure has been made in view of the above circumstances, and it is an object thereof to provide a customer-information providing system as a business tool, a control method therefor, and a computer program, which allow a sales representative to follow customers efficiently and appropriately, so that, as a result, the sales efficiency, the customer satisfaction, and the sales effect can be increased to be able not only to retain the existing customers, but also to increase the opportunity to get new transactions.

A customer-information providing system according to one aspect of the present disclosure includes: a history-information sending unit that sends information data related to the operation history of a customer apparatus in a customer store to a server apparatus through a network; a parameter calculating unit that calculates a parameter indicative of the operational status of the customer apparatus and/or the busyness of the customer store based on data related to the operation history; a customer-information sending unit that sends information related to the customer store and/or the customer apparatus including the calculated parameter to a user apparatus operated by a user (e.g., a sales representative); a display-information calculating unit that generates image data corresponding to display information to be provided to the user based on information related to the customer store and/or the customer apparatus; and a display unit that displays the display information corresponding to the image data. In this case, the parameter may be an actual value or a predicted value of the operational status of the customer apparatus and/or the busyness of the customer store. According to such a configuration, the operational status of the customer apparatus and/or the busyness of the customer store can be predicted or grasped sequentially and surely.

Here, the customer apparatus is not particularly limited. For example, a device as a cash register (also simply called "register" below), and an apparatus (including a device, a machine, a terminal, or a system) having a cash register function (also simply called "register function" below) can be mentioned. More specifically, a register having a point-of-sale (POS) information management function (including not only a register with the POS function integrated, but also a register system or the like including both a device having the POS function and the register), an apparatus on which application software to implement the POS function is installed, an apparatus configured to execute a system having application software to implement a POS function stored in the cloud or a POS function provided on the web, and the like can be mentioned.

Further, the parameter calculating unit may calculate the parameter in association with a time or a clock time. In this case, the operational status of the customer apparatus and/or the busyness of the customer store can be predicted or grasped in more detail and in more real time.

It is also preferred that the display-information calculating unit should calculate image data corresponding to display information to be provided to the user based on location information of the customer store. In this case, for example, the location of the customer store and the display information can be coordinated on a map to make the display easy to view.

It is further preferred that the display-information calculating unit should change the display form of information related to the customer store and/or the customer apparatus on the display unit according to (based on) the calculated parameter. In this case, for example, the operational status of the customer apparatus and/or the busyness of the customer store can be displayed in a manner easy to discriminate.

Further, the display-information calculating unit may display, on the display unit, part of information related to the customer store and/or the customer apparatus, and display, on the display unit, another part or all of the information related to the customer store and/or the customer apparatus according to an instruction from the user. In this case, even when the amount of the information related to the customer store and/or the customer apparatus is large, these pieces of information can be discriminated to make the display easy to understand.

A control method for a customer-information providing system according to one aspect of the present disclosure is a method to control the customer-information providing system according to the present disclosure effectively, including: causing a history-information sending unit to send information data related to the operation history of a customer apparatus in a customer store to a server apparatus through a network; causing a parameter calculating unit to calculate a parameter indicative of the operational status of the customer apparatus and/or the busyness of the customer store based on data related to the operation history; causing a customer-information sending unit to send information related to the customer store and/or the customer apparatus including the calculated parameter to a user apparatus operated by a user; causing a display-information calculating unit to generate image data corresponding to display information to be provided to the user based on information related to the customer store and/or the customer apparatus; and causing a display unit to display the display information corresponding to the image data.

A customer-information providing computer program according to one aspect of the present disclosure causes a computer (which is not limited to being single or of a single kind; which may be plural or of plural kinds) to function as: a history-information sending unit that sends information data related to the operation history of a customer apparatus in a customer store to a server apparatus through a network; a parameter calculating unit that calculates a parameter indicative of the operational status of the customer apparatus and/or the busyness of the customer store based on data related to the operation history; a customer-information sending unit that sends information related to the customer store and/or the customer apparatus including the calculated parameter to a user apparatus operated by a user; a display-information calculating unit that generates image data corresponding to display information to be provided to the user based on information related to the customer store and/or the customer apparatus; and a display unit that displays the display information corresponding to the image data.

### Advantageous Effects of Invention

According to the present disclosure, since the operational status of the customer apparatus and/or the busyness of the customer store can be predicted or grasped sequentially and surely, it can be determined whether to visit the customer store to follow more efficiently and appropriately. As a result, the sales efficiency, the customer satisfaction, and the sales effect can be increased, and it is also possible to increase the opportunity to get new transactions in addition to retaining existing customers.

### Brief Description of Drawings

Fig. 1 is a system block diagram schematically illustrating one preferred embodiment of a network configuration related to a customer-information providing system according to the present disclosure.
Fig. 2 is a system block diagram schematically illustrating an example of the configuration of a server apparatus in the customer-information providing system according to the present disclosure.
Fig. 3 is a system block diagram schematically illustrating an example of the configuration of a customer apparatus (register) in the customer-information providing system according to the present disclosure.
Fig. 4 is a system block diagram schematically illustrating an example of the configuration of a user apparatus (user terminal) in the customer-information providing system according to the present disclosure.
Fig. 5 is a table illustrating an example of the results of aggregating information data sent from a register in a customer store.
Fig. 6 is a table illustrating an example of the results of aggregating information data sent from a register in another customer store.
Fig. 7 is a plan view illustrating an example of a screen displayed on a display device of the user terminal.
Fig. 8 is a plan view illustrating another example of the screen displayed on the display device of the user terminal.
Fig. 9 is a plan view illustrating an example of a screen obtained by enlarging part of the display screen illustrated in Fig. 8.

### Description of Embodiments

An embodiment of the present disclosure will be described in detail below. Note that the following embodiment is an illustrative example to describe the present disclosure, and the present disclosure is not limited to the embodiment alone. Various modifications are possible without departing from the scope of the present disclosure. Further, those skilled in the art can adopt any other embodiment in which each component to be described below is replaced with an equivalent, and such an embodiment shall be included in the scope of the present disclosure. Further, positional relations such as up, down, right, left, and the like, illustrated as appropriate are based on the display illustrated in the drawings unless otherwise specified. Further, various dimensional ratios in the drawings are not limited to those illustrated in the drawings. In addition, description will be given below by taking, an example, an embodiment that assumes a sales technique to cause a user (sales representative) to follow the status of use of a register delivered or leased to a customer in order to facilitate understanding, but the present disclosure is not limited thereto as described above.

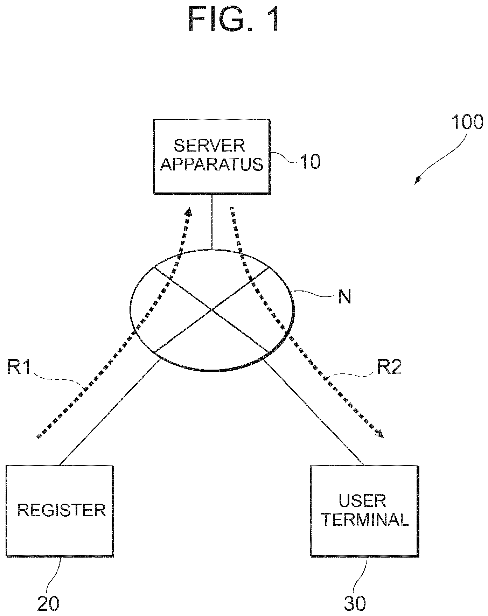

Fig. 1 is a system block diagram schematically illustrating one preferred embodiment of a network configuration concerning a customer-information providing system according to the present disclosure. A customer-information providing system 100 includes a server apparatus 10 connected through a network N to multiple registers 20 (customer apparatuses) and one or plural user terminals 30 (user apparatuses, which is one in the figure).

The server apparatus 10 is a network node having part of the functionality of the customer-information providing system 100, which is, for example, configured by a host computer having high computing power, where a predetermined server program is run on the host computer to implement the server function. In the embodiment, the server apparatus 10 is an apparatus which stores a variety of information data including information related to the sales of commercial goods received from the multiple registers 20, and performs arithmetic processing, and then sends the user terminals 30 the stored variety of information and/or the results of the arithmetic processing.

The network N is a communication network composed, for example, of a mixture of wired networks (a local area network (LAN), a wide area network (WAN), or a value-added communication network (VAN), and the like) and wireless networks (a mobile communication network, a satellite communication network, Bluetooth (registered trademark), WiFi (Wireless Fidelity), HSDPA (High Speed Downlink Packet Access), and the like).

On the other hand, for example, each register 20 is a register or an apparatus (including a device, a machine, a terminal, or a system) having the register function as described above. As more specific examples, there are a register having a POS function (including a register system provided with a device having the POS function and a register, or the like, as well as a register with the POS function integrated), an apparatus on which application software to implement the POS function is installed, an apparatus configured to execute a system having application software to implement a POS function stored in the cloud or a POS function provided on the web, and the like. In the embodiment, as a further specific example, it is assumed, as the register 20, a portable information terminal apparatus which adopts a user interface such as a touch panel and a high-visibility display, and has a communication function with the network N (in this respect, which is said to be one of network nodes), and in which POS application software is installed on a tablet terminal (including a cell-phone typified by a smartphone).

On the other hand, the user terminal 30 is a network node to receive information sent from the server apparatus 10 as described above, which is, for example, configured by a general-purpose communication terminal apparatus used by each user (sales representative or the like). More specifically, the user terminal 30 is also a tablet terminal like the register 20, on which tutorial software for customers, and the like may be installed if desired, as well as the same POS application software as that on the register 20 and information browsing application software for browsing information received from the server apparatus 10.

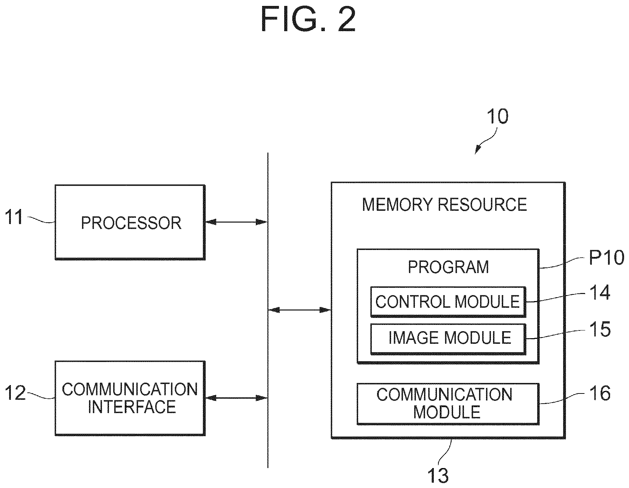

Fig. 2 is a system block diagram schematically illustrating an example of the configuration of the server apparatus 10. As illustrated in the figure, the server apparatus 10 includes a processor 11, a communication interface 12, and a memory resource 13.

The processor 11 is composed of an arithmetic-logic unit that performs processing such as arithmetic operation, logical operation, bit operation, and the like, and various registers (a program counter, a data register, an instruction register, a general-purpose register, and the like; these registers are different from the register 20) to interpret and execute a program P10 stored in the memory resource 13 and output the results of predetermined arithmetic processing.

The communication interface 12 is a hardware module to connect to the register 20 and the user terminal 30 through the network N, which is, for example, a modulator-demodulator device such as an ISDN modem, an ADSL modem, a cable modem, an optical modem, or a software modem.

The memory resource 13 is a logical device provided, for example, by a storage area of a physical device (a computer-readable recording medium of a disk drive, a semiconductor memory, or the like). In this case, plural physical devices may be mapped to one logical device, or one physical device may be mapped to plural logical devices. In this memory resource 13, an information transmission history from each register 20, a log related to an access history of the user terminal 30, and the like may be stored.

The program P10 is a program to perform a series of information processing (classification, processing, analysis, and the like of information) based on the variety of information sent from the multiple registers 20, which includes plural software modules called and executed appropriately during running of a main program (the server program described above, or the like) of the server apparatus 10. Such software modules are subprograms modularized to execute specific processes, respectively, which are created, for example, by using a procedure, a subroutine, a method, a function, a data structure, and the like. Note that the term "module" means a unit compilable by that part alone (but which is not limited thereto).

More specifically, the program P10 includes a control module 14 that performs various control operation processing on the variety of information acquired from the registers 20, an image module 15 that generates images to be displayed on the user terminal 30 and performs the display processing based on the results of processing by the control module 14, and a communication module 16 that performs communication processing with the network N via the communication interface 12, and the like. In the memory resource 13, operation parameters, such as parameters necessary for the control module 14 to perform the various control operation processing, parameters necessary for the image module 17 to create a layout, perform screen magnification processing, and the like when generating images and performing the display processing, may be stored.

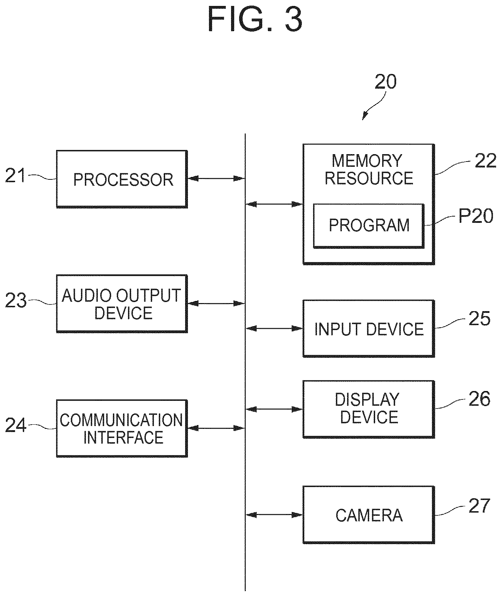

Fig. 3 is a system block diagram schematically illustrating an example of the configuration of each register 20. As described above, the register 20 in the embodiment is a portable information terminal apparatus in which POS application software is installed on a tablet terminal, which includes a processor 21, a memory resource 22, an audio output device 23, a communication interface 24, an input device 25, a display device 26, and a camera 27.

The processor 21 is composed of an arithmetic-logic unit and various registers (a program counter, a data register, an instruction register, a general-purpose register, and the like; these registers are different from the register 20). The processor 21 interprets and executes POS application software as a program P20 stored in the memory resource 22 to perform accounting of commercial goods according to operation information input to the input device 25, and send the information together with various other pieces of information to the server apparatus 10 via the network N. Note that the POS application software can be delivered, for example, from the server apparatus 10 via the network N, and may be installed on the register 20 before the register 20 is delivered or leased to the customer, or may be installed and updated by the customer or automatically after being delivered or leased.

The memory resource 22 is a logical device provided by a storage area of a physical device (for example, a computer-readable recording medium of a disk drive, a semiconductor memory, or the like) to store an operating system program, driver programs, various data, and the like used for processing by the register 20. For example, the driver programs include an input device driver program to control the input device 25, output device driver programs to control the audio output device 23 and the display device 26, and the like. various data include information related to commercial goods (the names, prices, kinds, and the like of the commercial goods), information related to the customer store (the customer name, store name, location, and the like), information related to operations to and actuation of the register (the register ID number, the log-in/log-out times, the actuation time, the name of a person in charge of the register, and the like), environmental data (weather, temperature, and the like), and so on.

The audio output device 23 is, for example, a sound player capable of playing back typical sound data.

The communication interface 24 is to provide a connection interface to the server apparatus 10, and is configured from a wireless communication interface or a wire communication interface.

The input device 25 is to provide an interface to accept an input operation to the register, and a touch panel, a keyboard, a mouse, and the like can be exemplified.

The display device 26 is to provide, to a user (a person in charge of the register of the customer), an image display interface for register operations, which is, for example, an organic EL display, a liquid crystal display, a CRT display, or the like.

The camera 27 is, for example, to capture or scan a still image including information code of commercial goods or attached to the commercial goods.

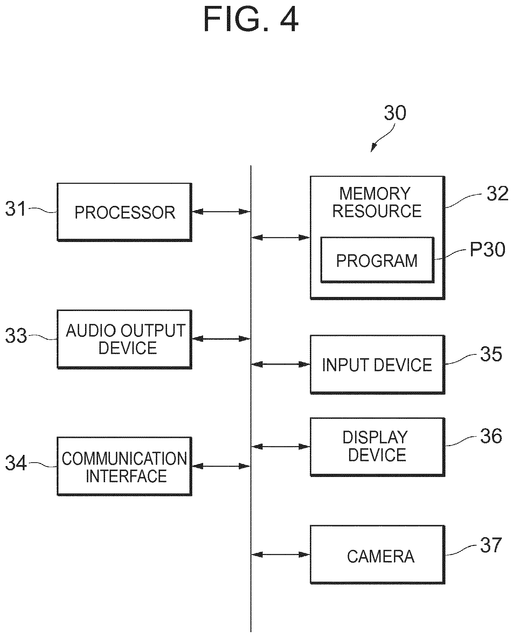

Fig. 4 is a system block diagram schematically illustrating an example of the configuration of the user terminal 30. As described above, the user terminal 30 in the embodiment is a tablet terminal similar to the register 20, and has a system configuration (physical configuration) equivalent to that of the register 20. In other words, the user terminal 30 includes a processor 31, a memory resource 32, an audio output device 33, a communication interface 34, an input device 35, a display device 36, and a camera 37.

The processor 31 is configured similar to the processor 21 to receive information sent from the server apparatus 10, interpret and execute information browsing application software as a program P30 stored in the memory resource 32, and display various image data on the display device 36.

The memory resource 32 is configured similar to the memory resource 22 to store an operating system program, driver programs, various data, and the like used for processing by the user terminal 30. For example, the driver programs include an input device driver program to control the input device 35, output device driver programs to control the audio output device 33 and the display device 36, and the like.

Like the audio output device 23, the audio output device 33 is a sound player capable of playing back typical sound data.

Like the communication interface 24, the communication interface 34 is to provide a connection interface to the server apparatus 10, and is configured from a wireless communication interface or a wire communication interface.

The input device 35 is to provide an interface to accept an input operation in order to access information stored in the user terminal 30, and a touch panel, a keyboard, a mouse, and the like can be exemplified.

The display device 36 is to provide, to a user (a sales representative, or the like), an image display interface to browse information stored in the user terminal 30, which is, for example, an organic EL display, a liquid crystal display, a CRT display, or the like.

An example of the basic operation in the customer-information providing system 100 configured as mentioned above can be such that a variety of information from the multiple registers 20 are automatically sent to the server apparatus 10 via the network N (a processing route R1 indicated by a dashed arrow in Fig. 1), and the server apparatus 10 stores the variety of information and performs appropriate arithmetic processing, and sends information (processed data) obtained as the arithmetic results to the user terminal 30 through the network N (a processing route R2 indicated by a dashed arrow in Fig. 1). A flow of more specific processing in this case is, for example, as follows.

First, a person in charge of the register of the customer actuates the register 20 to cause the processor 21 of the register 20 to start the program P20 (POS application software) in order to log in (sign in) the customer-information providing system 100 as a POS system. At this time or prior to the log-in, the person in charge of the register can appropriately configure predetermined settings necessary for accounting. In this state, when the input device 25 of the register 20 is operated to perform accounting for commercial goods, the processor 21 collects information data (corresponding to "information data related to the operation history of the customer apparatus in the customer store") obtained by the register processing, and other additional information data. As described above, the information data include information related to accounting (name, price, kind, and the like), information related to the customer store (customer name, store name, location, and the like), information related to operations to and actuation of the register (register ID number, log-in/log-out times, actuation time, the name of a person in charge of the register, and the like), environmental data (weather, temperature, and the like), and so on. Then, the processor 21 uses the communication interface 24 to send the information data to the server apparatus 10. Thus, the processor 21 and the communication interface 24 correspond to a "history-information sending unit."

The server apparatus 10 uses the communication interface 12 to receive the information data, and stores the information data in the memory resource 13. The processor 11 calls the control module 14 of the program P10 to analyze and aggregate the information data. This aggregate method is not particularly limited. For example, there is aggregate method using a table format in which the operational status of the register 20 and/or the busyness of the customer store are reflected.

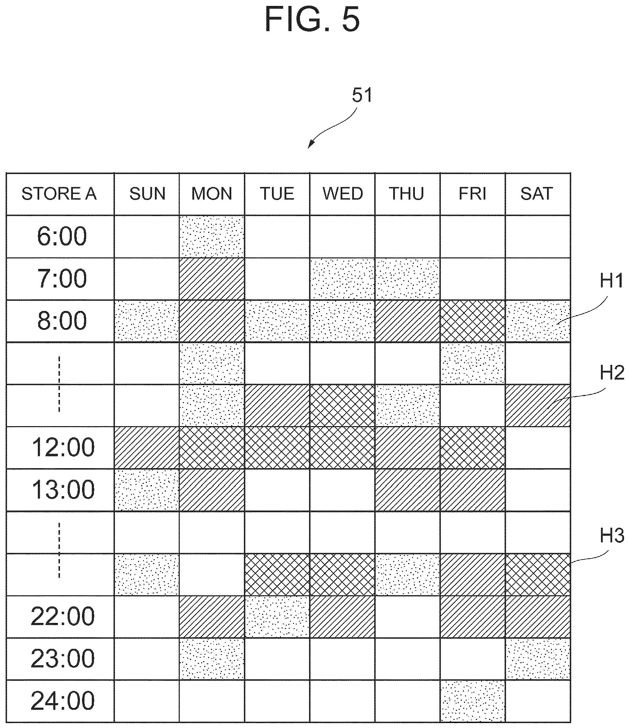

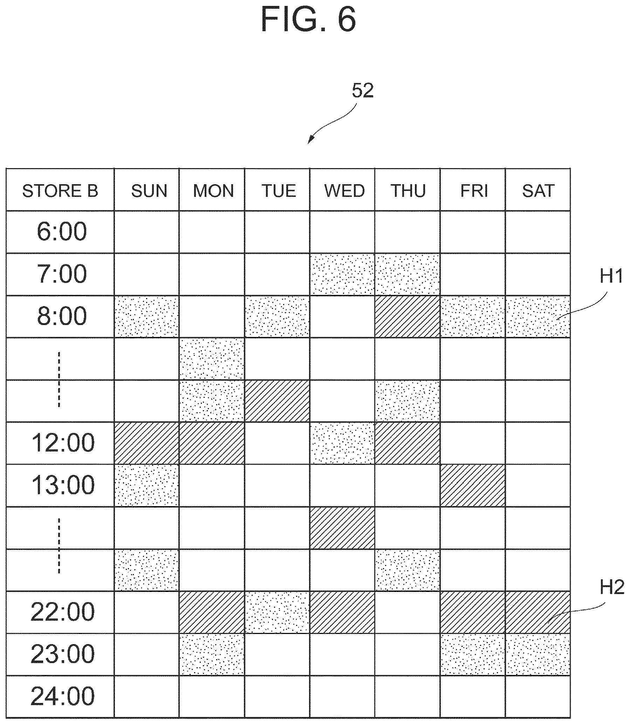

Therefore, the aggregate results of the information data are visualized by such a table format and illustrated in Fig. 5 and Fig. 6. Fig. 5 illustrates the results of aggregating the information data sent from the register 20 in a store A for each day of the week and each time zone (spreadsheet table 51), and Fig. 6 illustrates similar aggregate results (spreadsheet table 52) in a store B.

In this case, based on the information data from the register 20, the processor 11 calculates a parameter(s) (index(es)) indicative of the operational status of the register 20 and/or the busyness of each customer store. Here, for example, the concepts of such parameters include (1) an actualized active rate (hereinafter called the "real active rate") and (2) a potential active rate (hereinafter called the "active potential rate"), and so on.

### (1) Real Active Rate Ar

The real active rate Ar is, for example, an "actual value" indicative of the operational status of the register 20 and/or the busyness of the customer store for each day of the week and each time zone, and the calculation method is not particularly limited. For example, there is a method using the following (i) and (ii).
(i) The number of times K of accounting (settlement) for commercial goods at a register 20 per hour is compared with an appropriate reference value K0, and the ratio (fraction) is set as the real active rate Ar of the register 20 or the customer store. For example, if K0 = 100 and K = 27, the real active rate Ar = ratio K/K0 = 0.27. The significant digits in this case may be decided appropriately. Further, the real active rate Ar may also be expressed in percentage as the real active rate Ar = 27%, or the value may be decupled and round off to obtain an integer as the real active rate Ar = 3.
(ii) The real active rate Ar calculated at (i) mentioned above is corrected using, for example, settlement amount of money (sales) of commercial goods. As a correction coefficient, for example, a sales ratio of a target hour to time average sales of the day is used. For example, when there is an amount of sales in the target hour, which is 1 1/2 times the average, the real active rate Ar = ratio K/K0 = 0.27 x 1.5 = 0.405 in the case of (i) mentioned above. In this case, the significant digits may also be decided appropriately, may be expressed in percentage (the real active rate Ar = 41 %), or may be turned into an integer (the real active rate Ar = 4) like (i) mentioned above.

### (2) Active Potential Rate Ap

The active potential rate Ap is an "predicted value" indicative of the operational status of the register 20 and/or the busyness of the customer store in the future, and the calculation method is not particularly limited. For example, there is the following method. In other words, for example, a correlation between information, which includes the information related to accounting, the information related to operations to and actuation of each register, and the like, in the information data on many customer stores stored in the server apparatus 10, and the progress of the above actualized, real active rate Ar (changes in real active rate Ar over time) is analyzed to construct a data model to deduce that "the register 20 will begin to be used actively at a predetermined operating rate X days after with a probability of Y%." Then, the latest information data on each customer store and a desired value of "X" are input to the data model to make a trial calculation so as to estimate "Y" as the active potential rate Ap.

Then, the processor 11 displays, in each of the spreadsheet tables 51, 52 of Fig. 5 and Fig. 6, the calculated numerical value of the real active rate Ar without any change or after the numerical value is further processed. As the display after being further processed, for example, there is a case where the real active rate Ar is aggregately classified into three levels, such as "low," "normal," and "high," to display the real active rate Ar as each of textures H1, H2, and H3 (which may be either monochrome or color), respectively, as illustrated in Fig. 5 and Fig. 6, or an example in which each of these textures is displayed together with the numerical value of the real active rate Ar.

Further, the active potential rate Ap may also be displayed together with the spreadsheet table 51, 52. In this case, the active potential rate Ap may also be aggregately classified into three levels, such as "low," "normal," and "high," to display the active potential rate Ap as each of textures (which may be either monochrome or color), or each of these textures may be displayed together with the numerical value (Y%) of the active potential rate Ap.

When only one register 20 is provided in a customer store, the above-mentioned real active rate Ar and active potential rate Ap become common parameters indicative of both the operational status of the register 20 and the busyness of the customer store (the actual value and the predicted value, respectively). When more than one register 20 are provided in a customer store, the real active rate Ar and active potential rate Ap calculated based on the whole sum of accounting of all the registers 20 become parameters indicative of average busyness of the entire customer store (the actual value and the predicted value, respectively), and the real active rate Ar and active potential rate Ap calculated for each register 20 become parameters indicative of the operational status of the register 20 (the actual value and the predicted value, respectively). Thus, the processor 11 corresponds to a "parameter calculating unit" to calculate the real active rate Ar and active potential rate Ap as the "parameters indicative of the operational status of the customer apparatus and/or the busyness of the customer store."

In fact, these aggregate results are stored in the memory resource 13 as data fields of the day of the week, the time zone, and the operating frequency, and as a data structure including the textural images associated with the operating frequencies.

On the other hand, a user (sales representative) can run information browsing application software as the program P30 from among application software installed on the user terminal 30 to access data, for example, each of the spreadsheet tables 51, 52 stored in the server apparatus 10 and illustrated in Fig. 5 and Fig. 6, and other aggregate data on each customer store in order to browse the data.

In this case, when the user runs the program P30 by tapping, clicking (depressing), or the like on an icon of the program P30 displayed on the display device 36 (display or the like), an appropriate menu screen is displayed on the display device 36 to request the user to log in (sign in) as needed. From the menu, for example, when the user makes a section to tap or click on a display button of aggregate data for each customer store, the processor 31 uses the communication interface 34 to send a request signal to the server apparatus 10.

When the server apparatus 10 receives the request signal using the communication interface 12, the processor 11 calls information data (data structure) stored in the memory resource 13 and corresponding to each of the spreadsheet table 51, 52 illustrated in Fig. 5 and Fig. 6 to create image data of the spreadsheet table 51, 52 through the image module 15. Further, the processor 11 converts the image data to communication data through the communication module 16, and sends the data to the user terminal 30 using the communication interface 12. Thus, the information data sent to the user terminal 30 corresponds to the "information related to the customer store and/or customer apparatus including the calculated parameter," and the processor 11, the communication interface 12, and the memory resource 13 correspond to a "customer-information sending unit."

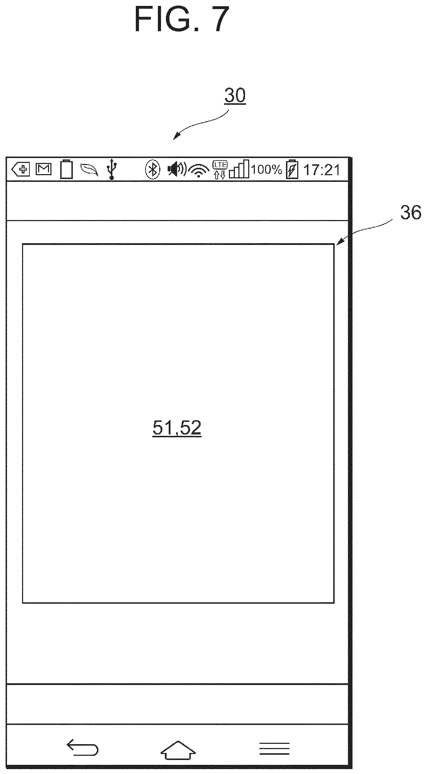

Next, the user terminal 30 that received the information data signal using the communication interface 34 stores the information data in the memory resource 32. Based on the information data, the processor 31 reconfigures the image data ("display information") to display each of the spreadsheet table 51, 52 illustrated in Fig. 5 and Fig. 6. Then, the processor 31 uses the image data to display the spreadsheet table 51, 52 on the display device 36 (see Fig. 7). At this time, the spreadsheet table 51, 52 may be displayed on one screen, or displayed in a manner to be switchable among two or more screens. Thus, the processor 31 corresponds to a "display-information calculating unit to generate mage data corresponding to display information to be provided to the user," and the processor 31 and the display device 36 correspond to a "display unit."

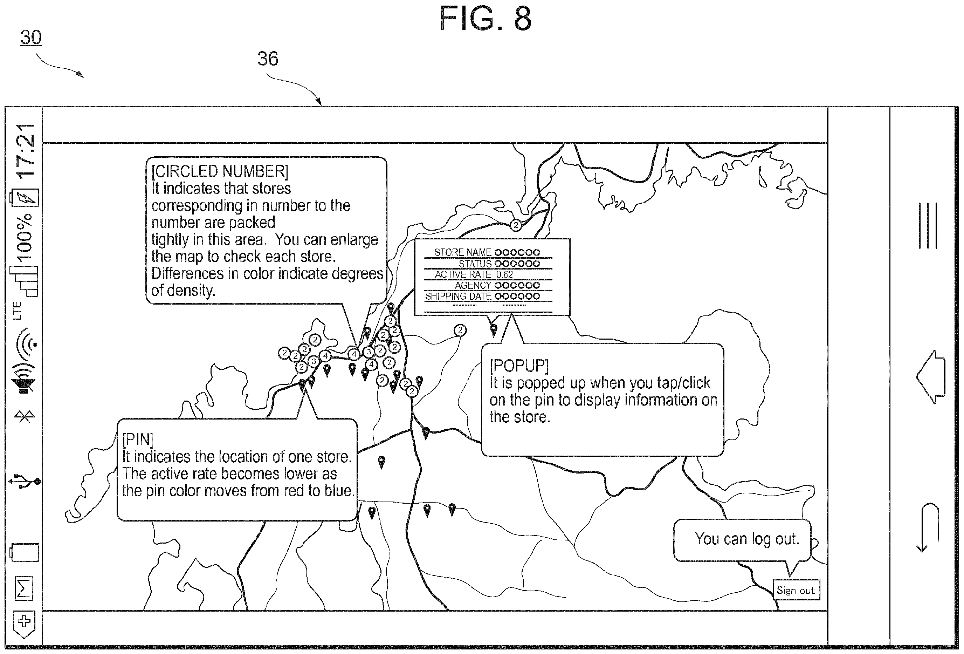

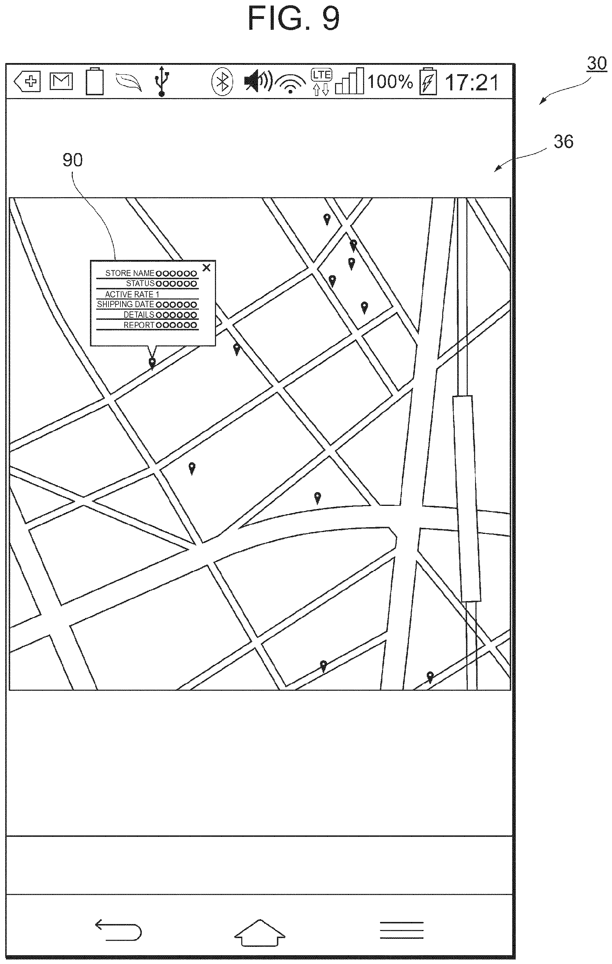

Further, Fig. 8 and Fig. 9 are plan views illustrating other examples of screens to be displayed on the display device 36 of the user terminal 30 (other examples of customer information). Fig. 9 illustrates an example of a screen as a result of enlarging part of a display screen illustrated in Fig. 8. IN the example of the screen illustrated in Fig. 8, "pin, "circled number," "popup," and "sign-out" buttons are displayed on a map image. Like the image of the spreadsheet table 51, 52 described above, the image is displayed on the display device 36 after the image data is created by the processor 11 of the server apparatus 10 and reconfigured by the processor 31 of the user terminal 30 that received the image data.

Here, the "pin" indication is an indication to indicate the location of each customer store, which is displayed in a different color depending on the active potential rate Ap described above. For example, the pin color is red, blue, or a color therebetween, and the active potential rate Ap may be reduced as the pin color moves from red to blue. Here, in Fig. 8 and Fig. 9, examples of the pin indication based on the active potential rate Ap are illustrated (note that "active rate" is just mentioned in the figures), but each pin based on the real active rate instead of the active potential rate Ap, or together with the active potential rate Ap may be indicated. In this case, pins different between the real active rate Ar and the active potential rate Ap may be indicated, or both may be indicated by the same pin with different colored tints. Thus, in Fig. 8, the pin indication is so configured that the display form of information related to the customer store and/or the customer apparatus on the display device 36 will change according to the real active rate Ar and/or the active potential rate Ap as the calculated parameters.

The "circled number" indication indicates that there are customer stores corresponding in number to the number in an area indicated by the circle when customer stores are packed too tightly to indicate each store by a pin on the map scale. In this case, the map can be enlarged to check the pin indication of each store. Further, the circle indicative of this area is also colored, and displayed in a different color depending on the density of customer stores.

The "popup" window is not always displayed, which is an indication popped up into the foreground of the screen when the pin is tapped or clicked (user's instruction), and the user can check at least part of information associated with the customer store indicated by the pin. The kinds of information displayed there may be fixed, or may be able to be changed by the user from the default configuration as needed. In the example illustrated, the kinds of information include the customer store name, the status (the number of registers 20 in operation, and the like), the active rate (e.g., the real active rate Ar, the active potential rate Ap), the agency, the shipping date of each delivered or leased register 20, and the like. Further, when tapping or clicking on a "Sign out" button, the user can log out or sign out of this system.

Note that the description of "pin," "circled number," "popup," and the "Sign out" button within the frame of a balloon format as illustrated may be always displayed as a normal screen, or may be displayed, for example, only when "pin," "circled number," "popup," and the "Sign out" button are tapped or clicked.

As described above, a computer program for providing customer information according to the present disclosure is configured from the program P10 running on the server apparatus 10, the program P20 running on the register 20, and the program P30 running on the user terminal 30.

According to the customer-information providing system 100 thus configured, the control method therefor, and the computer program for providing customer information, the real active rate Ar and/or the active potential rate Ap are calculated from information data related to the operation history of the register 20 as the customer apparatus, and based on the real active rate Ar and/or the active potential rate Ap, the user (sales representative or the like) can check information related to the customer store sequentially at appropriate timing, such as the operational status of the register 20 and the busyness of the customer store displayed on the user terminal 30.

For example, in the case where a textural display based on the real active rate Ar is provided as in Fig. 5 and Fig. 6, when information on store A and information on store B are compared, it is obvious at a glance that the store B is lower than store A not only in terms of the operating rate of the register 20 and the busyness (actual value) of the store as a whole regardless of the day of the week and the time zone. Therefore, the user (sales representative, or the like) can accurately determine that the user should focus on following store B, rather than store A. Further, since the user can learn, from the spreadsheet table 51, 52, the past status of each customer store for each day of the week and each time zone, the user can create a visit plan for each day of the week and each time zone as customer follow-up activities efficiently and appropriately.

Further, use of the active potential rate Ap makes it easy to foresee the future status of each customer store, and further effective customer follow-up activities of the user (sales representative) can be defined to further improve sales efficiency. For example, when the active potential rate Ap of each customer store is estimated based on such a data model that "the register 20 will begin to be used actively at a predetermined operating rate 30 days after with a probability of Y%," the follow-up activities can be defined as follows:
- Stores with Y = 0%: The necessity of follow-up is "high." It takes long.
- Stores with Y = 0 to 30%: The necessity of follow-up is "medium." It does not take long.
- Stores with Y = 30 to 60%: The necessity of follow-up is "low." It does not take time.
- Stores with Y = more than 60%: Follow-up is unnecessary.

According to the follow-up activities thus developed, for example, in the case of a customer store whose active potential rate Ap (i.e. Y) is estimated as 50%, since the necessity of follow-up is "low" and there is no need to take time to follow, such a plan that the user (sales representative) only have to drop by 30 days after can be made. Then, since the user has the time to spare, the user can take time to focus on following any other customer store whose active potential rate Ap (Y) is estimated as 0% (to give guidance about how to use the register 20, and the like).

As a result, the sales efficiency, the customer satisfaction, and the sales effect can be increased, and it is also possible to have an opportunity to get new transactions in addition to retaining existing customers.

Further, according to store information illustrated in Fig. 8 and Fig. 9, the current operating rate of each register 20 and the actual value and/or predicted value of the store busyness can be checked more intuitively. This makes it easy for the user to make an instantaneous determination such as to surely grasp a customer store the user should visit promptly to follow, and hence the user can determine whether to visit the customer store to follow more efficiently and appropriately. As a result, the sales efficiency, the customer satisfaction, and the sales effect can be further increased, and it is also possible to further increase the opportunity to get new transactions in addition to retaining existing customers.

Further, since the real active rate Ar is calculated in association with the time or the clock time, the information on each customer store can be grasped more carefully. Further, as illustrated in Fig. 8 and Fig. 9, since location information on the customer store is indicated by a pin and information on the customer store is displayed in association with the pin indication, the user (sales representative) can take follow-up action more appropriately and smoothly, further increasing the sales efficiency. Furthermore, as illustrated in Fig. 8 and Fig. 9, since the display forms of information related to the customer store and/or the register 20 (colors of each pin and circle, a popup display, and the like) are changed according to the numerical values of the real active rate Ar and/or the active potential rate Ap, there is an advantage that the user (sales representative) can grasp the operating rate of the register 20 and the busyness of the customer store more promptly and in a visually accurate manner.

As described above, each of the aforementioned embodiments is just an example to describe the present disclosure, and is not intended to limit the present disclosure. The present disclosure can be modified in various ways without departing from the scope of the present disclosure. For example, a person skilled in the art can replace the resources (hardware resources or software resources) described in the embodiment with equivalents, and such a replacement shall be included in the scope of the present disclosure.

For example, in order to check the past trend or make a prediction from the past trend as the display of the real active rate Ar on the screens illustrated in Fig. 8 and Fig. 9, data corresponding to the current days of the week and time zones of information being checked by the user may be selected or highlighted from data on the past days of the week and time zones as illustrated in the spreadsheet table 51, 52 to be able to display the data. Further, environmental information (weather, temperature, and the like) may also be displayed together in the spreadsheet table 51, 52. It is needless to say that the present disclosure is not limited to the form of so-called route business. Further, a computer that constitutes the server apparatus 10 is not limited to the host computer. For example, a general-purpose communication terminal apparatus may constitute the server apparatus 10. Further, the host computer that constitutes the server apparatus 10 does not always have to be one computer, and the server apparatus 10 may be composed of two or more sub computers distributed on the network N.

Further, a gateway server or the like that converts a communication protocol between both may, of course, intervene between the server apparatus 10 and the register 20, and between the server apparatus 10 and the user terminal 30. Further, the server apparatus 10, the register 20, or the user terminal 30 may be a general-purpose communication terminal apparatus. For example, such apparatuses include a desktop-type personal computer, a notebook-type personal computer, a tablet-type personal computer, a laptop-type personal computer, and a portable telephone including a smartphone. More specifically, as the portable telephone, a handheld portable terminal such as of PDC (Personal Digital Cellular), PCS (Personal Communication System), GSM (registered trademark) (Global System for Mobile communications), PHS (Personal Handy phone System), or PDA (Personal Digital Assistant) can be exemplified. Further, for example, data communication methods in these portable telephones can include the following standards: W-CDMA (Wideband Code Division Multiple Access), CDMA-2000 (Code Division Multiple Access-2000), IMT-2000 (International Mobile Telecommunication - 2000), Wibro (Wireless Broadband Internet), and the like.

### Industrial Applicability

According to the present disclosure, the sales efficiency, the customer satisfaction, and the sales effect can be increased, and this can also increase the opportunity to get new transactions in addition to retaining existing customers. Therefore, the present disclosure can be widely used for activities such as the design, manufacture, providing, sales, and the like of each of the program, system, and method in the field of providing services necessary to follow customers.

Each aspect of the present disclosure described above will be more specifically described as follows: In other words, a customer-information providing system according to one aspect of the present disclosure includes: a history-information sending unit that sends information data related to the operation history of a customer apparatus as a cash register or having a cash register function in a customer store to a server apparatus through a network; a parameter calculating unit that calculates a parameter indicative of the operational status of the customer apparatus based on information data related to the operation history; a customer-information sending unit that sends information related to the customer apparatus including the calculated parameter to a user apparatus operated by a user as a sales representative; a display-information calculating unit that generates image data corresponding to display information to be provided to the user based on information related to the customer apparatus; and a display unit that displays the display information corresponding to the image data. Then, the parameter calculating unit calculates an actual value of the operational status of the customer apparatus as the parameter from a ratio between the number of times K of accounting on the customer apparatus per predetermined time and a reference value K0 of a preset number of times of accounting.

Further, the parameter calculating unit may be configured to analyze a correlation between information data related to the operation history of the customer apparatus and a change in actual value of the operational status of the customer apparatus over time, create a data model to deduce that the customer will begin to use the customer apparatus at a predetermined operating rate X days after with a probability of Y%, and input, to the data model, the latest information data related to the operation history of the customer apparatus and the value of X to further calculate, as a parameter, a predicted value Y% of the operational status of the customer apparatus.

Further, the parameter calculating unit may calculate the parameter in association with a time or a clock time.

Further, the display-information calculating unit may be configured to generate map data, including the location of the customer store, the actual value of the operational status of the customer apparatus as display information to be provided to the user, and the number of customer stores located in a predetermined area, based on location information of the customer store.

Further, a display form of information related to the customer apparatus on the display unit may be changed according to the calculated parameter.

Alternatively, the display-information calculating unit may display, on the display unit, part of information related to the customer apparatus, and display, on the display unit, another part or all of the information related to the customer apparatus according to an instruction from the user.

A control method for a customer-information providing system according to one aspect of the present disclosure includes: causing a history-information sending unit to send information data related to an operation history of a customer apparatus as a cash register or having a cash register function in a customer store to a server apparatus through a network; causing a parameter calculating unit to calculate a parameter indicative of the operational status of the customer apparatus based on information data related to the operation history; causing a customer-information sending unit to send information related to the customer apparatus including the calculated parameter to a user apparatus operated by a user as a sales representative; causing a display-information calculating unit to generate image data corresponding to display information to be provided to the user based on information related to the customer apparatus; and causing a display unit to display the display information corresponding to the image data. Then, the parameter calculating unit calculates, as a parameter, an actual value of the operational status of the customer apparatus from a ratio between the number of times K of accounting on the customer apparatus per predetermined time and a reference value K0 of a preset number of times of accounting.

A customer-information providing computer program according to one aspect of the present disclosure causes a computer (which is not limited to being single or of a single kind; which may be plural or of plural kinds) to function as the history-information sending unit, the parameter calculating unit, the customer-information sending unit, the display-information calculating unit, and the display unit described above.

### Reference Signs List

- 10: server apparatus
- 11: processor
- 12: communication interface
- 13: memory resource
- 14: control module
- 15: image module
- 16: communication module
- 17: image module
- 20: register (customer apparatus)
- 21: processor
- 22: memory resource
- 23: audio output device
- 24: communication interface
- 25: input device
- 26: display device
- 27: camera
- 30: user terminal (user apparatus)
- 31: processor
- 32: memory resource
- 33: audio output device
- 34: communication interface
- 35: input device
- 36: display device
- 37: camera
- 51, 52: spreadsheet table
- 100: customer-information providing system
- H1, H2, H3: texture
- N: network
- P10, P20, P30: program
- R1, R2: processing route

## Claims

1. A customer-information providing system comprising:
a history-information sending unit that sends information data related to an operation history of a customer apparatus in a customer store to a server apparatus through a network;
a parameter calculating unit that calculates a parameter indicative of operational status of the customer apparatus and/or busyness of the customer store based on data related to the operation history;
a customer-information sending unit that sends information related to the customer store and/or the customer apparatus including the calculated parameter to a user apparatus operated by a user;
a display-information calculating unit that generates image data corresponding to display information to be provided to the user based on information related to the customer store and/or the customer apparatus; and
a display unit that displays the display information corresponding to the image data.

2. The customer-information providing system according to claim 1, wherein the customer apparatus is a register or an apparatus having a register function.

3. The customer-information providing system according to claim 1, wherein the parameter calculating unit calculates the parameter in association with a time or a clock time.

4. The customer-information providing system according to claim 1, wherein the display-information calculating unit calculates image data corresponding to display information to be provided to the user based on location information of the customer store.

5. The customer-information providing system according to claim 1, wherein the display-information calculating unit changes a display form of information related to the customer store and/or the customer apparatus on the display unit according to the calculated parameter.

6. The customer-information providing system according to claim 1, wherein the display-information calculating unit displays, on the display unit, part of information related to the customer store and/or the customer apparatus, and displays, on the display unit, another part or all of the information related to the customer store and/or the customer apparatus according to an instruction from the user.

7. The customer-information providing system according to claim 1, wherein the parameter indicates an actual value or a predicted value of the operational status of the customer apparatus and/or the busyness of the customer store.

8. A control method for a customer-information providing system including a history-information sending unit, a parameter calculating unit, a customer-information sending unit, a display-information calculating unit, and a display unit, comprising:
causing the history-information sending unit to send information data related to an operation history of a customer apparatus in a customer store to a server apparatus through a network;
causing the parameter calculating unit to calculate a parameter indicative of operational status of the customer apparatus and/or busyness of the customer store based on data related to the operation history;
causing the customer-information sending unit to send information related to the customer store and/or the customer apparatus including the calculated parameter to a user apparatus operated by a user;
causing the display-information calculating unit to generate image data corresponding to display information to be provided to the user based on information related to the customer store and/or the customer apparatus; and
causing the display unit to display the display information corresponding to the image data.

9. A customer-information providing computer program causing a computer to function as:
a history-information sending unit that sends information data related to an operation history of a customer apparatus in a customer store to a server apparatus through a network;
a parameter calculating unit that calculates a parameter indicative of operational status of the customer apparatus and/or busyness of the customer store based on data related to the operation history;
a customer-information sending unit that sends information related to the customer store and/or the customer apparatus including the calculated parameter to an information terminal apparatus operated by a user (sales representative);
a display-information calculating unit that generates image data corresponding to display information to be provided to the user based on information related to the customer store and/or the customer apparatus; and
a display unit that displays the display information corresponding to the image data.

10. A computer-readable recording medium on which a customer-information providing program is recorded, the customer-information providing program causing a computer to function as:
a history-information sending unit that sends information data related to an operation history of a customer apparatus in a customer store to a server apparatus through a network;
a parameter calculating unit that calculates a parameter indicative of operational status of the customer apparatus and/or busyness of the customer store based on data related to the operation history;
a customer-information sending unit that sends information related to the customer store and/or the customer apparatus including the calculated parameter to an information terminal apparatus operated by a user (sales representative);
a display-information calculating unit that generates image data corresponding to display information to be provided to the user based on information related to the customer store and/or the customer apparatus; and
a display unit that displays the display information corresponding to the image data.

11. The customer-information providing system according to claim 1, wherein
the customer-information sending unit sends information related to the customer apparatus including the calculated parameter to the user apparatus operated by the user as a sales representative, and
the parameter calculating unit calculates an actual value of operational status of the customer apparatus as the parameter from a ratio between the number of times K of accounting on the customer apparatus per predetermined time and a reference value K0 of a preset number of times of accounting.
